(19) Europäisches Patentamt / European Patent Office / Office européen des brevets

(11) **EP 3 314 394 B1**

(12) **FASCICULE DE BREVET EUROPEEN**

(45) Date de publication et mention
de la délivrance du brevet:
**03.07.2019 Bulletin 2019/27**

(21) Numéro de dépôt: **16731110.9**

(22) Date de dépôt: **17.06.2016**

(51) Int Cl.:
***G06F 7/70*** *(2006.01)*

(86) Numéro de dépôt international:
**PCT/EP2016/064023**

(87) Numéro de publication internationale:
**WO 2017/001212 (05.01.2017 Gazette 2017/01)**

(54) **MICROPROCESSEUR PARALLÈLE STOCHASTIQUE**

STOCHASTISCHER PARALLELER MIKROPROZESSOR

STOCHASTIC PARALLEL MICROPROCESSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.06.2015 FR 1556102**

(43) Date de publication de la demande:
**02.05.2018 Bulletin 2018/18**

(73) Titulaires:
• **Centre National de la Recherche Scientifique
75016 Paris (FR)**
• **College de France
75005 Paris (FR)**

(72) Inventeurs:
• **DROULEZ, Jacques
75004 Paris (FR)**
• **BESSIERE, Pierre
75013 Paris (FR)**

(74) Mandataire: **Lavoix
2, place d'Estienne d'Orves
75441 Paris Cedex 09 (FR)**

(56) Documents cités:
**GB-A- 1 184 652**

• **GAINES B: "Stochastic computer thrives on noise", ELECTRONICS, VNU BUSINESS PUBLICATIONS, NEW YORK, US, vol. 40, no. 14, 10 juillet 1967 (1967-07-10), pages 72-79, XP002092489, ISSN: 0883-4989**
• **POPPELBAUM W J ET AL: "Stochastic computing elements and systems", FALL JOINT COMPUTER CONFERENCE, 1 novembre 1967 (1967-11-01), - 1 novembre 1967 (1967-11-01), pages 635-644, XP058027876, DOI: 10.1145/1465611.1465696**
• **ARMIN ALAGHI ET AL: "Survey of Stochastic Computing", ACM TRANSACTIONS ON EMBEDDED COMPUTING SYSTEMS, ACM, NEW YORK, NY, US, vol. 12, no. 2s, 1 mai 2013 (2013-05-01), pages 1-19, XP058018698, ISSN: 1539-9087, DOI: 10.1145/2465787.2465794**

**Description**

La présente invention concerne un microprocesseur de type stochastique, permettant notamment d'effectuer des calculs parallèles. Elle trouve en particulier une application aux domaines dans lesquels il est fait appel de manière importante au calcul de probabilité et à la gestion de l'incertitude, tels que les marchés financiers, la modélisation macro-économique, la prévision météorologique, la modélisation d'évolution à long terme. Elle trouve également une application aux domaines dans lesquels des méthodes d'apprentissage sont utilisées, par exemple dans le cas des algorithmes génétiques, notamment en robotique et en intelligence artificielle. Elle trouve encore une application au domaine de la cryptographie. D'une manière générale, l'invention trouve une application à tout domaine dans lequel des calculs intensifs de nature probabiliste ou stochastique sont requis.

De nos jours, les microprocesseurs classiques utilisés dans les systèmes informatiques connus ont atteint une limite physique supérieure en termes de vitesse de calcul.

En effet, la vitesse de la lumière impose une borne supérieure à la cadence des horloges. Depuis les années 2000, la cadence des horloges des microprocesseurs classiques stagne vers 3 ou 4 GHz.

Par ailleurs, ces microprocesseurs classiques ont également atteint une limite physique inférieure en termes de miniaturisation.

En effet, les dimensions de gravure des circuits intégrés ne descendent pas sous la barre des 10 nm en deçà desquels le comportement des circuits logiques devient instable et non déterministe. Aussi, les circuits logiques ne peuvent être miniaturisés davantage sans remettre en question leur fiabilité.

Pour dépasser ces limites et répondre aux besoins toujours croissants en puissance de calcul, on peut faire fonctionner en parallèle un grand nombre de processeurs. Mais les systèmes basés sur ce fonctionnement sont coûteux, volumineux, imposent une infrastructure adaptée et consomment une quantité importante d'énergie.

En outre, concernant plus particulièrement la consommation énergétique, la notion de bruit thermique joue un rôle important. En effet, en dessous de la « barre » du bruit thermique, il n'est plus possible d'assigner un comportement déterministe aux transistors dont sont constitués la plupart des composants d'un microprocesseur classique.

Par ailleurs, aujourd'hui, un nombre croissant d'applications font massivement appel aux calculs de probabilité et à la gestion de l'incertitude. Ces applications sont très coûteuses en puissance de calcul, lorsqu'elles sont mises en oeuvre sur des systèmes informatiques classiques, car ces derniers sont conçus pour fonctionner de manière totalement déterministe.

Or, quel que soit le domaine d'application, la simulation par des modèles probabilistes à grande échelle est actuellement réalisée par des machines déterministes comprenant un très grand nombre de processeurs interconnectés, selon des architectures de type cluster ou supercalculateur, dans des installations très coûteuses et terme d'infrastructure et de consommation énergétique, avec des besoins importants notamment en termes de climatisation et de refroidissement des « multicoeurs ».

Un des buts de l'invention est donc de résoudre les problèmes précités. Ainsi, l'invention a notamment pour objectif de proposer un microprocesseur permettant de lever les verrous technologiques présentés plus haut, en abandonnant la contrainte de fonctionnement parfaitement déterministe.

L'invention a donc pour objet, selon un premier aspect, un microprocesseur comprenant au moins un module élémentaire de calcul stochastique apte à recevoir en entrée au moins deux signaux d'entrée binaires aléatoires et indépendants représentant chacun un codage binaire respectivement de deux valeurs de probabilité en entrée données, et apte à générer en sortie au moins un signal de sortie binaire aléatoire à partir de deux signaux d'entrée

Le module élémentaire comprend au moins une unité logique programmable, apte à combiner deux signaux d'entrée pour générer un signal de sortie selon au moins une fonction logique déterminée, en sorte que le signal de sortie représente un codage binaire d'une valeur de probabilité en sortie fonction des valeurs de probabilité en entrée données.

Le module élémentaire comprend également au moins une mémoire adressable, apte à stocker une valeur de probabilité en sortie codée par un signal de sortie généré par l'unité logique.

Le module élémentaire comprend encore au moins une première horloge stochastique, apte à produire un premier signal d'horloge impulsionnel aléatoire pour contrôler la vitesse d'écriture, dans la mémoire, d'une valeur de probabilité en sortie codée par le signal de sortie généré par l'unité logique.

Le module élémentaire comprend aussi au moins une deuxième horloge stochastique apte à produire un deuxième signal d'horloge impulsionnel aléatoire pour contrôler la vitesse de lecture de la mémoire, en sorte de fournir l'évaluation courante, sur une fenêtre temporelle donnée, d'une valeur de probabilité en sortie stockée dans la mémoire.

Suivant certains modes de réalisation, le microprocesseur comprend en outre une ou plusieurs des caractéristiques suivantes, prise(s) isolément ou suivant toutes les combinaisons techniquement possibles :

- le module élémentaire est apte, d'une part à recevoir en entrée des signaux d'entrée binaires aléatoires et indépendants représentant chacun un codage binaire impulsionnel stochastique ou un codage binaire temporel télégraphique respectivement des deux valeurs de probabilité en entrée données, et d'autre part à générer en sortie un signal de sortie binaire aléatoire, de type télégraphique ou impulsionnel, et l'unité logique est apte à combiner les deux signaux d'entrée pour générer le signal de sortie selon la fonction logique déterminée, en sorte que le signal de sortie représente un codage binaire impulsionnel stochastique ou un codage binaire temporel télégraphique de la valeur de probabilité en sortie fonction des valeurs de probabilité en entrée données ;

- l'unité logique est apte à combiner les deux signaux d'entrée pour générer le signal de sortie selon l'une ou plusieurs des fonctions produit, somme et division, en sorte que la valeur de probabilité en sortie codée par le signal de sortie corresponde respectivement au produit, à la somme et à la division, des valeurs de probabilités en entrées codées respectivement par les deux signaux d'entrée ;

- le microprocesseur comprend plusieurs modules élémentaires tels que présentés ci-dessus, et il est apte à générer en parallèle au moins deux signaux de sortie par l'intermédiaire d'au moins deux modules élémentaires déterminés parmi lesdits modules élémentaires, en sorte de permettre la mise en oeuvre de façon parallèle d'au moins deux calculs stochastiques correspondants ;

- les au moins deux modules élémentaires déterminés sont interconnectés en sorte de permettre l'échange de signaux entre eux ;

- la mémoire d'au moins un des deux modules élémentaires interconnectés est apte à stocker des instructions d'interconnexion relatives à l'interconnexion et à l'échange de signaux d'entrée et de sortie entre les deux module élémentaire interconnectés ;

- le microprocesseur comprend au moins deux modules élémentaires distants, et une ou plusieurs boîtes d'interrupteurs adressables en sorte de permettre l'échange de signaux d'entrée et de sortie entre les deux modules élémentaires distants ;

- le microprocesseur comprend un ou plusieurs générateurs de signaux aléatoires chacun apte à générer un signal binaire aléatoire représentant un codage binaire d'une valeur de probabilité associée à un nombre binaire, et le ou les modules élémentaires sont aptes à recevoir en entrée deux signaux d'entrée binaires aléatoires et indépendants générés par le ou les générateurs de signaux aléatoires.

L'invention a également pour objet, selon un deuxième aspect, un système informatique comprenant au moins une mémoire centrale apte à stocker des instructions et au moins une unité centrale de calcul apte à exécuter des instructions stockées dans la mémoire centrale, l'unité centrale de calcul comprenant au moins un microprocesseur tel que présenté ci-dessus.

Ainsi, le microprocesseur de l'invention associe sur un même substrat des composants classiques à comportement déterministe, tels que des portes logiques, des mémoires adressables et des bascules, et des nano-composants présentant un comportement aléatoire, ce qui permet d'augmenter considérablement les performances en termes de calculs probabilistes tout en réduisant les coûts de fabrication, d'entretien, de fonctionnement et de consommation énergétique.

Dans le cas d'une architecture avec plusieurs modules élémentaires fonctionnant en parallèle, le microprocesseur stochastique de l'invention rassemble au sein d'un même circuit intégré un grand nombre d'horloges et de composants générant des évènements aléatoires, ainsi qu'un grand nombre de mémoires et de circuits logiques.

Le caractère stochastique des évènements supprime le verrou de synchronisation et permet de réaliser en parallèle un grand nombre d'opération.

En effet, le haut degré de parallélisme qu'autorise l'utilisation d'horloges aléatoires augmente considérablement les performances.

Ainsi, par rapport à un microprocesseur d'architecture conventionnelle, le microprocesseur de l'invention permet d'effectuer beaucoup plus rapidement des calculs probabilistes et stochastiques.

Plus généralement, l'abandon des contraintes de fonctionnement parfaitement déterministe et prévisible des microprocesseurs classiques, permet une utilisation du microprocesseur de l'invention pour générer et simuler des processus stochastiques à une très grande échelle, permettant ainsi d'étendre largement le domaine d'application des simulations de type Monte Carlo de phénomènes complexes et de résoudre ou d'approcher des problèmes d'inférences probabilistes portant sur un grand nombre de variables aléatoires, tels que ceux posés par les marchés financiers, les modèles macro-économiques, les prévisions météorologiques, ou les modèles d'évolution à long terme.

Le microprocesseur de l'invention permet en outre de générer de façon no algorithmique, ou partiellement algorithmique, des nombres aléatoires tirés d'une distribution quelconque.

Les caractéristiques et avantages de l'invention apparaitront à la lecture de la description qui va suivre, donnée uniquement à titre d'exemple, et non limitative, en référence aux figures annexées suivantes :

- figure 1 : représentation schématique de l'architecture d'un module élémentaire de calcul stochastique dans un exemple de microprocesseur selon l'invention ;
- figures 2 à 6 : représentations schématiques d'exemples de composants logiques élémentaires formant tout ou partie d'une unité logique programmable d'un module élémentaire de calcul stochastique dans un microprocesseur selon l'invention.

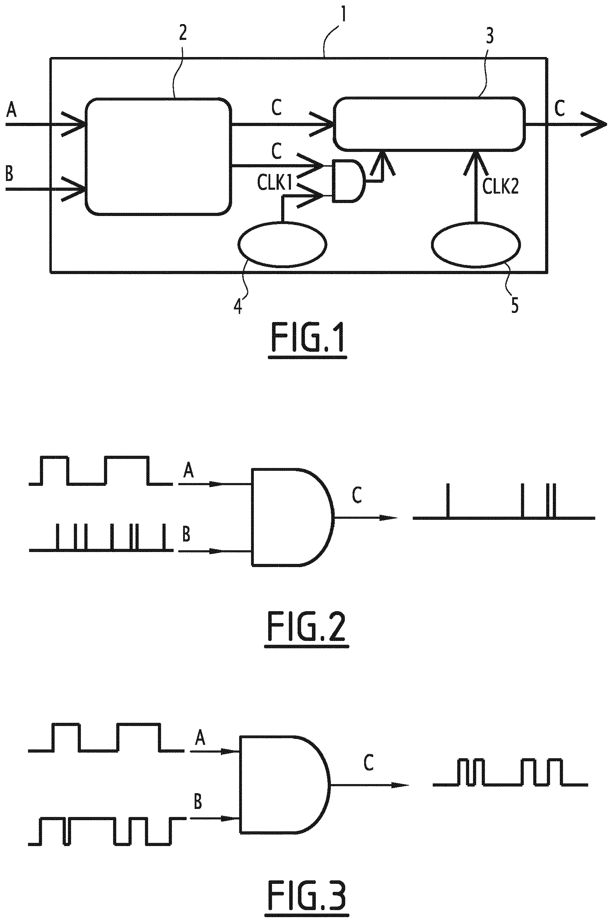

Un microprocesseur selon l'invention comprend au moins un module élémentaire 1 de calcul stochastique tel que représenté dans un exemple en figure 1.

Ce module élémentaire peut recevoir en entrée deux signaux d'entrée A, B, ou plus.

Ces signaux d'entrée A, B sont des signaux binaires aléatoires et indépendants représentant chacun un codage binaire respectivement de deux valeurs de probabilité en entrée données.

Deux types de codage élémentaire pour les valeurs de probabilité peuvent être utilisés : un codage impulsionnel stochastique et un codage temporel télégraphique.

Avec un codage impulsionnel stochastique, les signaux présentent des séries d'impulsions ultra-brèves de sorte que la probabilité d'observer une impulsion à un moment quelconque soit fonction de la valeur de probabilité codée.

Ainsi, avec ce type de codage, le nombre d'impulsions observées pendant un intervalle de temps déterminé fournit une estimation de la valeur de la probabilité codée. Plus l'intervalle de temps déterminé est grand, au regard de la fréquence moyenne des impulsions, plus la précision du codage de la valeur de probabilité est grande.

Avec un codage temporel télégraphique, les signaux alternent de façon aléatoire entre les deux états 0 et 1 de sorte que le temps cumulé pendant lequel le signal est dans l'état 1 rapporté à la durée totale de l'intervalle de temps déterminé d'observation est égal à la valeur de probabilité codée.

Ces deux types de codage des valeurs de probabilité sont complémentaires. Ils sont tous les deux basés sur des signaux électriques de nature binaire, donc compatibles avec les circuits logiques classiques.

Il n'existe pas de contraintes théoriques sur la distribution statistique des intervalles de temps entre deux impulsions successives dans un signal impulsionnel, ou entre deux transitions d'état dans un signal télégraphique.

En particulier, une distribution selon une statistique de Poisson est tout à fait adaptée. Dans ce cas, une horloge générant des impulsions stochastique sera définie par un seul paramètre : la fréquence moyenne. La durée des impulsions peut être aussi brève que possible, mais doit rester suffisante pour permettre la transition d'état des bascules.

Les processus physiques responsables du comportement aléatoire des composants doivent être indépendants entre eux. En particulier, ils ne doivent pas engendrer de corrélation temporelle entre deux signaux distincts.

Le microprocesseur selon l'invention peut comprendre un ou plusieurs générateurs de signaux aléatoires, non représentés sur la figure 1, chacun permettant de générer un signal binaire aléatoire représentant un codage binaire, par exemple selon l'un des types présentés plus haut, d'une valeur de probabilité associée à un nombre binaire. Le module élémentaire 1 reçoit alors en entrée les signaux d'entrée A, B générés par le ou les générateurs de signaux aléatoires.

Le module élémentaire 1 est apte à générer en sortie au moins un signal de sortie C binaire aléatoire, à partir des deux signaux d'entrée A, B.

Ce module élémentaire 1 comprend par ailleurs au moins une unité logique 2 programmable.

Cette unité logique 2 comprend un certain nombre de composants logiques classiques, organisés selon une architecture logique déterminée, en sorte de permettre la génération du signal de sortie C selon au moins une fonction logique déterminée à partir de la combinaison des signaux d'entrée A, B.

Ainsi, le signal de sortie C représente un codage binaire d'une valeur de probabilité en sortie qui est fonction des valeurs de probabilité en entrée codées respectivement par les signaux d'entrée A, B.

Selon la fonction réalisé par l'unité logique 2, et selon la nature du signal en entrée A et la nature du signal en entrée B, le signal en sortie C représente un codage binaire impulsionnel stochastique ou un codage binaire temporel télégraphique de la valeur de probabilité en sortie fonction des valeurs de probabilité en entrée.

Sur les figures 2 à 6, on a représenté des exemples de composants logiques élémentaires pouvant former tout ou partie de l'unité logique 2 du module élémentaire 1.

D'une manière générale, le microprocesseur de l'invention doit permettre d'effectuer tout type de calcul probabiliste à l'aide des signaux aléatoires A, B. Or, en théorie des probabilités, tout calcul repose sur la combinaison de trois règles, simples à énoncer mais qui se révèlent coûteuses à implémenter avec un microprocesseur conventionnel.

La première règle est la règle du produit, ou règle de Bayes, selon laquelle la probabilité conjointe de deux variables A, B est égale au produit de la probabilité d'une première des deux variables A, B par la probabilité de l'autre conditionnée par la première:

$$P(\,A\,\&\,B) = P(A)\,.\,P(B\mid A) = P(B)\,.\,P(A\mid B)$$

La deuxième règle est la règle de la somme, ou règle de marginalisation, selon laquelle la distribution de probabilité sur une première variable A est égale à la somme des probabilité conjointes de la première variable A et d'une deuxième variable B pour toutes les valeurs possibles de la deuxième variable B. Ainsi, si la deuxième variable B peut prendre n valeurs de 1 à n, la règle de la somme donne :

$$P(A) = P(A \,\&\, B{=}1) + P(A \,\&\, B{=}2) + \ldots + P(A \,\&\, B{=}n{-}1) + P(A \,\&\, B{=}n)$$

La troisième règle est la règle de la normalisation. Elle résulte de la contrainte imposée en théorie des probabilités selon laquelle la somme des probabilités de toutes les valeurs possibles d'une variable doit être égale à 1. Or, il est souvent plus facile de réaliser des calculs à un facteur multiplicatif près. Cette règle de la normalisation impose donc de diviser les résultats de calcul intermédiaires proportionnels par un facteur de normalisation, de sorte que la somme finale des probabilités pour toutes les valeurs possibles de la variable concernée soit égale à 1.

Ainsi, le microprocesseur de l'invention doit permettre d'effectuer l'équivalent des opérations produit, somme et division sur les signaux physiques aléatoires représentant les valeurs de probabilité.

Ces trois opérations peuvent être réalisées par des circuits logiques, implémentés dans l'unité logique 2, prenant en entrée deux signaux stochastiques, ou aléatoires, de type télégraphique ou impulsionnel comme vu précédemment.

A titre d'exemple, illustré dans les figures 2 et 3, le produit peut être réalisé par une porte logique « ET » prenant en entrée deux signaux aléatoires indépendants, tous deux de type télégraphique (figure 3), ou l'un de type télégraphique et l'autre de type impulsionnel (figure 2).

Ainsi, dans l'exemple de la figure 2, une porte logique « ET » reçoit en entrée un signal télégraphique A dont la probabilité de valoir 1 est notée P(A = 1), et un signal impulsionnel B dont la fréquence moyenne est notée $F_B$. Les deux signaux en entrée A et B sont aléatoires et indépendants.

Le signal de sortie C est alors un signal impulsionnel aléatoire dont la fréquence moyenne $F_C$ est le produit de la fréquence moyenne du signal impulsionnel en entrée B et de la probabilité de valoir 1 du signal télégraphique en entrée A :

$$F_C = F_B \,.\, P(A = 1)$$

Autrement dit, la fréquence moyenne $F_C$ du signal de sortie C est égale au produit de la fréquence moyenne $F_B$ du signal en entrée B par le temps passé par le signal d'entrée A dans l'état 1 rapporté au temps total d'observation.

Par ailleurs, comme illustré par l'exemple dans la figure 2, une porte logique « ET » constitue un composant logique élémentaire permettant de convertir un signal d'entrée A ou B de type télégraphique en signal de sortie C de type impulsionnel.

Dans l'exemple de la figure 3, une porte logique « ET » reçoit en entrée deux signaux télégraphiques A et B, dont les probabilités respectives de valoir 1 sont notées P(A = 1) et P(B = 1). Les deux signaux en entrée A et B sont aléatoires et indépendants.

Le signal de sortie C est alors un signal télégraphique aléatoire dont la probabilité de valoir 1 est le produit de la probabilité de valoir 1 du signal télégraphique en entrée A et de la probabilité de valoir 1 du signal télégraphique en entrée B :

$$P(C = 1) = P(A = 1) \,.\, P\,(B = 1)$$

Autrement dit, le signal de sortie C est tel que le temps passé dans l'état 1 rapporté au temps total d'observation est égal au produit du temps passé par le signal d'entrée A dans l'état 1 par le temps passé par le signal d'entrée B chacun rapporté au temps total d'observation.

On rappelle que ce qui précède est vrai à condition que la condition d'indépendance temporelle des processus physiques sous-jacents de la génération des signaux aléatoires A, B, mentionnée plus haut, soit respectée.

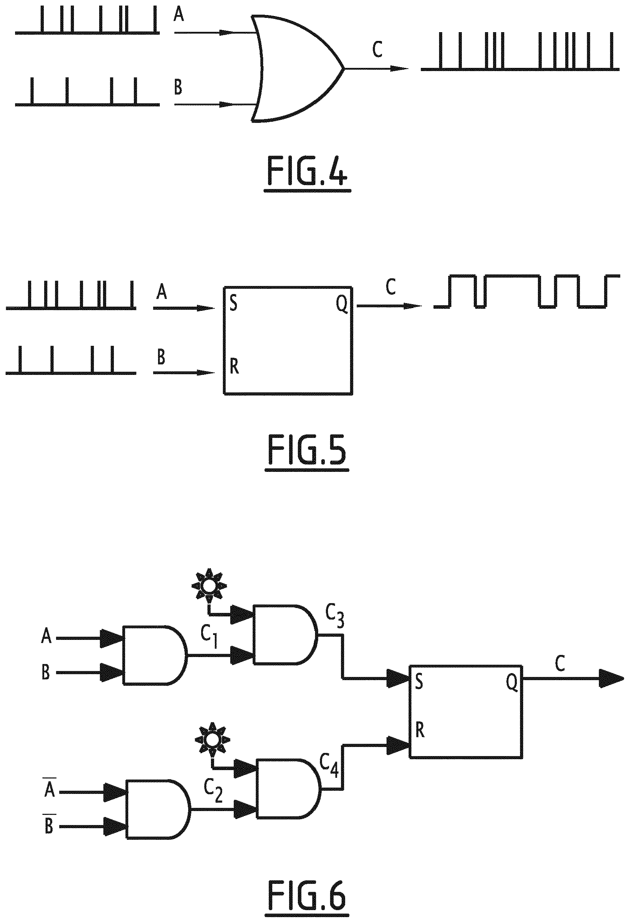

A titre d'exemple, illustré dans la figure 4, la somme peut être réalisée par une porte logique « OU » prenant en entrée deux signaux aléatoires A et B indépendants, c'est-à-dire temporellement décorrélés, tous deux de type impulsionnel.

Ainsi, dans cet exemple de la figure 4, une porte logique « OU » reçoit en entrée ces deux signaux impulsionnels A et B dont les fréquences moyennes respectives sont notées $F_A$ et $F_B$. Les deux signaux en entrée A et B sont aléatoires et indépendants.

Le signal de sortie C est alors un signal impulsionnel aléatoire dont la fréquence moyenne $F_C$ est la somme des fréquences moyennes respectives des signaux impulsionnels en entrée A et B :

$$F_C = F_A + F_B$$

A titre d'exemple, illustré dans la figure 5, l'opération de division peut être réalisée par une porte bascule (mémoire à 1 bit) prenant en entrée deux signaux aléatoires A et B temporellement décorrélés, tous deux de type impulsionnel, l'un sur l'entrée S (« set ») et l'autre sur l'entrée R (« reset »).

Dans cet exemple de la figure 5, la bascule reçoit en entrée les deux signaux impulsionnels A et B, dont les fréquences moyennes respectives sont notées $F_A$ et $F_B$. Les deux signaux en entrée A et B sont aléatoires et indépendants.

Le signal de sortie C est alors un signal télégraphique aléatoire dont la côte, c'est-à-dire la probabilité que le signal en sortie C vaille 1 rapportée à la probabilité que ce signal en sortie C vaille 0, est égale à la fréquence moyenne du signal d'entrée A rapportée à la fréquence moyenne du signal en entrée B :

$$P(C = 1) / P(C = 0) = F_A / F_B$$

Autrement dit, on obtient un signal de sortie C de type télégraphique, tel que, en moyenne, le temps passé dans l'état 1 rapporté au temps passé dans l'état 0 est égal au quotient des fréquences moyennes $F_A$ et $F_B$ des signaux impulsionnels d'entrée A et B.

Par ailleurs, comme illustré par l'exemple dans la figure 5, une bascule, ou mémoire à 1 bit, constitue un composant logique élémentaire permettant de convertir un signal d'entrée A ou B de type impulsionnel en signal de sortie C de type télégraphique.

Dans l'exemple de la figure 6, deux signaux télégraphiques en entrée A et B, aléatoires et indépendants, sont tous d'abord combinés en passant dans une première porte logique « ET », comme dans l'exemple de la figure 3.

Parallèlement, deux signaux télégraphiques en entrée $\overline{A}$ et $\overline{B}$, complémentaires respectifs des signaux en entrée A et B, également aléatoires et indépendants, sont combinés en passant dans une deuxième porte logique « ET », également comme dans l'exemple de la figure 3.

Les signaux télégraphiques aléatoires en sortie des première et deuxième portes logique « ET » sont chacun recombinés avec un signal impulsionnel aléatoire dans deux autres portes logiques « ET ». On obtient en sortie de ces deux autres portes logiques « ET » deux signaux impulsionnels aléatoires, qui sont combinés en passant dans une bascule (ou mémoire à 1 bit) comme dans l'exemple de la figure 5.

Le signal de sortie C de cette bascule est alors un signal télégraphique aléatoire dont la côte, c'est-à-dire la probabilité que le signal en sortie C vaille 1 rapportée à la probabilité que ce signal en sortie C vaille 0, est égale au produit des côtes des signaux télégraphiques en entrée A et B :

$$P(C = 1) / P(C = 0) = [P(A = 1) / P(A = 0)] . [P(B = 1) / P(B = 0)]$$

En se référant de nouveau à la figure 1, le module élémentaire 1 comprend par ailleurs au moins une mémoire 3 adressable, qui permet de stocker les valeurs de probabilité en sortie codées par les signaux de sortie C générés par l'unité logique 2.

Une première horloge 4 stochastique est utilisée pour contrôler l'écriture dans la mémoire 2. Pour ce faire, la première horloge 4 produit un premier signal d'horloge CLK1 impulsionnel aléatoire qui est reçu en entrée par la mémoire 3 parallèlement au signal de sortie C de l'unité logique 2. Les impulsions du signal CLK1 permettent donc de contrôler l'écriture de la valeur de probabilité en sortie codée par le signal de sortie C.

Une deuxième horloge 5 stochastique est utilisée pour contrôler la lecture dans la mémoire 3. Pour ce faire, la deuxième horloge 5 produit un deuxième signal d'horloge CLK2 impulsionnel aléatoire qui est reçu par la mémoire 3. Les impulsions du signal CLK2 permettent donc de fournir l'évaluation courante, sur une fenêtre temporelle donnée, d'une valeur de probabilité en sortie stockée dans la mémoire 3.

Pour la réalisation de calculs probabilistes complexes, une grande quantité d'opérateurs somme, produit et division sont nécessaires. Dans ce cas, le microprocesseur de l'invention comprend plusieurs modules élémentaires 1 tels que décrits plus haut, interconnectés. Chaque module élémentaire1 constitue ainsi une unité élémentaire de calcul stochastique.

Dans ce cas, on parlera de microprocesseur parallèle stochastique. Ce dernier est apte à générer en parallèle plusieurs signaux de sortie C par l'intermédiaire de plusieurs modules élémentaires 1 déterminés parmi l'ensemble des modules élémentaires 1 qu'il comprend,, en sorte de permettre la mise en oeuvre de façon parallèle de plusieurs calculs stochastiques correspondant chacun à l'un des modules élémentaires 1 déterminés.

Le microprocesseur de l'invention à plusieurs modules élémentaires 1 interconnectés, comprend donc un ou plusieurs composants stochastiques, une ou plusieurs bascules, plusieurs mémoires 3 adressables, et différents circuits logiques implémentés dans les différentes unités logiques 2 programmables.

Les circuits logiques implémentés dans les unités logiques 2 définissent les fonctions réalisables par les modules élémentaires 1 correspondants.

L'interconnexion entre modules élémentaires 1 est réalisée en sorte que deux modules élémentaires 1 physiquement voisins sur le substrat, puissent échanger des signaux d'entrée et de sortie A, B, C.

Précisément, la mémoire 3 d'un module élémentaire 1 interconnecté avec un autre module élémentaire 1 contient des instructions d'interconnexion qui sont relatives à la façon dont les deux modules élémentaires 1 vont échanger des signaux d'entrée et de sortie A, B, C et à l'acheminement de ces signaux d'un module élémentaire à l'autre.

Par ailleurs, la mémoire 3 d'un module élémentaire 1 quelconque contient la spécification de la ou des fonctions à appliquer aux signaux en entrée A, B par l'unité logique 2 pour obtenir le signal en sortie C.

Par ailleurs, le microprocesseur comprend également, en dehors du ou des modules élémentaires 1 stochastiques, un ou plusieurs circuits de décodage des adresses, et une horloge déterministe pour la synchronisation des cycles de lecture et d'écriture des mémoires 3.

Pour l'échange entre modules élémentaires 1 distants, on peut prévoir des boîtes d'interrupteurs adressables, pour permettre l'échange de signaux d'entrée et de sortie A, B, C entre ces modules élémentaires 1 distants.

Les interconnexions entre modules élémentaires 1 voisins ou distants permettent d'acheminer deux types de signaux : les signaux télégraphiques aléatoires, tels que ceux produits en sortie d'une bascule, et les signaux impulsionnels aléatoires tels que ceux générés par les horloges stochastiques.

Pour l'initialisation et la modification du contenu des mémoires 3 adressables, divers modules d'entrée/sortie spécifiques peuvent être utilisés. Ainsi, pour la programmation, on peut interfacer le microprocesseur de l'invention avec un ordinateur conventionnel. Dans ce cas, le microprocesseur est considéré comme un périphérique spécialisé dans le calcul probabiliste intensif.

Un microprocesseur parallèle stochastique selon l'invention associe donc sur un même substrat des composants classiques à comportement déterministe, tels que des portes logiques, des mémoires adressables et des bascules, pouvant être réalisés selon la technologie habituelle des transistors à effet de champ (FET, MOSFET), et des nano-composants présentant un comportement aléatoire pour la génération de signaux aléatoires, ces signaux pouvant être combinés et manipulés par les circuits logiques classiques.

Différents processus physiques peuvent être utilisés pour la réalisation des horloges et composants stochastiques à une taille nanométrique : effet tunnel, capture ou émission de photons, ou simplement exploitation du comportement instable des transistors sous-alimentés ou de taille nanométrique.

Un tel microprocesseur parallèle stochastique permet de représenter et de manipuler des distributions de probabilité au niveau le plus fondamental : celui des signaux électriques et des nano-composants. Les signaux électriques stochastiques constituent en effet un support naturel pour les informations probabilistes.

La présente description est donnée à titre d'exemple et n'est pas limitative de l'invention.

En particulier les circuits logiques simples représentés aux figures 2 à 6 ne sont que des exemples de circuits logiques qui peuvent être implémentés dans les unités logiques 2 programmables des modules élémentaires 1 d'un microprocesseur selon l'invention.

## Revendications

**1.** Microprocesseur comprenant au moins un module élémentaire (1) de calcul stochastique apte à recevoir en entrée au moins deux signaux d'entrée (A, B) binaires aléatoires et indépendants représentant chacun un codage binaire respectivement de deux valeurs de probabilité en entrée données, et apte à générer en sortie au moins un signal de sortie (C) binaire aléatoire à partir de deux signaux d'entrée (A, B), ledit module élémentaire (1) comprenant :

- au moins une unité logique (2) programmable, apte à combiner deux signaux d'entrée (A, B) pour générer un signal de sortie (C) selon au moins une fonction logique déterminée, en sorte que le signal de sortie (C) représente un codage binaire d'une valeur de probabilité en sortie fonction des valeurs de probabilité en entrée données ;
- au moins une mémoire (3) adressable, apte à stocker une valeur de probabilité en sortie codée par un signal de sortie (C) généré par l'unité logique (2) ;
- au moins une première horloge (4) stochastique, apte à produire un premier signal d'horloge (CLK1) impulsionnel aléatoire pour contrôler la vitesse d'écriture, dans la mémoire (3), d'une valeur de probabilité en sortie codée par le signal de sortie (C) généré par l'unité logique (2) ;
- au moins une deuxième horloge (5) stochastique apte à produire un deuxième signal d'horloge (CLK2) impulsionnel aléatoire pour contrôler la vitesse de lecture de la mémoire (3), en sorte de fournir l'évaluation courante, sur une fenêtre temporelle donnée, d'une valeur de probabilité en sortie stockée dans la mémoire (3).

**2.** Microprocesseur selon la revendication 1, dans lequel le module élémentaire (1) est apte, d'une part à recevoir en entrée des signaux d'entrée (A, B) binaires aléatoires et indépendants représentant chacun un codage binaire impulsionnel stochastique ou un codage binaire temporel télégraphique respectivement des deux valeurs de probabilité en entrée données, et d'autre part à générer en sortie un signal de sortie (C) binaire aléatoire, de type télégraphique ou impulsionnel, et dans lequel l'unité logique (2) est apte à combiner les deux signaux d'entrée (A, B) pour générer le signal de sortie (C) selon la fonction logique déterminée, en sorte que le signal de sortie (C) représente un codage binaire impulsionnel stochastique ou un codage binaire temporel télégraphique de la valeur de probabilité en sortie fonction des valeurs de probabilité en entrée données.

3. Microprocesseur selon l'une quelconque des revendications 1 et 2, dans lequel l'unité logique (2) est apte à combiner les deux signaux d'entrée (A, B) pour générer le signal de sortie (C) selon l'une ou plusieurs des fonctions produit, somme et division, en sorte que la valeur de probabilité en sortie codée par le signal de sortie (C) corresponde respectivement au produit, à la somme et à la division, des valeurs de probabilités en entrées codées respectivement par les deux signaux d'entrée (A, B).

4. Microprocesseur selon l'une quelconque des revendications 1 à 3, le microprocesseur comprenant plusieurs modules élémentaires (1) selon l'une quelconque des revendications 1 à 3, le microprocesseur étant apte à générer en parallèle au moins deux signaux de sortie (C) par l'intermédiaire d'au moins deux modules élémentaires (1) déterminés parmi lesdits modules élémentaires (1), en sorte de permettre la mise en oeuvre de façon parallèle d'au moins deux calculs stochastiques correspondants.

5. Microprocesseur selon la revendication 4, dans lequel les au moins deux modules élémentaires (1) déterminés sont interconnectés en sorte de permettre l'échange de signaux entre les deux modules élémentaires (1).

6. Microprocesseur selon la revendication 5, dans lequel la mémoire (3) d'au moins un des deux modules élémentaires (1) interconnectés est apte à stocker des instructions d'interconnexion relatives à l'interconnexion et à l'échange de signaux d'entrée et de sortie (A, B, C) entre les deux module élémentaire (1) interconnectés.

7. Microprocesseur selon l'une quelconque des revendications 4 à 6, le microprocesseur comprenant au moins deux modules élémentaires (1) distants, le microprocesseur comprenant en outre une ou plusieurs boîtes d'interrupteurs adressables en sorte de permettre l'échange de signaux d'entrée et de sortie (A, B, C) entre les deux modules élémentaires (1) distants.

8. Microprocesseur selon l'une quelconque des revendications 1 à 7, le microprocesseur comprenant un ou plusieurs générateurs de signaux aléatoires chacun apte à générer un signal binaire aléatoire représentant un codage binaire d'une valeur de probabilité associée à un nombre binaire, et dans lequel le ou les modules élémentaires (1) sont aptes à recevoir en entrée deux signaux d'entrée (A, B) binaires aléatoires et indépendants générés par le ou les générateurs de signaux aléatoires.

9. Système informatique comprenant au moins une mémoire centrale apte à stocker des instructions et au moins une unité centrale de calcul apte à exécuter des instructions stockées dans la mémoire centrale, dans lequel l'unité centrale de calcul comprend au moins un microprocesseur selon l'une quelconque des revendications 1 à 8.

**Patentansprüche**

1. Mikroprozessor, aufweisend mindestens ein Grundmodul (1) zur stochastischen Berechnung, welches dazu eingerichtet ist, am Eingang mindestens zwei binäre, zufällige und unabhängige Eingangssignale (A, B), welche jeweils eine Binärcodierung von jeweils zwei gegebenen eingangsseitigen Wahrscheinlichkeitswerten darstellen, zu empfangen, und dazu eingerichtet ist, am Ausgang mindestens ein binäres, zufälliges Ausgangssignal (C) ausgehend von den zwei Eingangssignalen (A, B) zu erzeugen, wobei das Grundmodul (1) aufweist:

- mindestens eine programmierbare Logikeinheit (2), welche dazu eingerichtet ist, zwei Eingangssignale (A, B) zu kombinieren, um ein Ausgangssignal (C) gemäß mindestens einer bestimmten logischen Funktion zu erzeugen, so dass das Ausgangssignal (C) eine Binärcodierung eines ausgangsseitigen Wahrscheinlichkeitswerts abhängig von den gegebenen eingangsseitigen Wahrscheinlichkeitswerten darstellt,
- mindestens einen adressierbaren Speicher (3), welcher dazu eingerichtet ist, einen ausgangsseitigen Wahrscheinlichkeitswert, der durch ein mittels der Logikeinheit (2) erzeugtes Ausgangssignal (C) kodiert ist, zu speichern,
- mindestens einen ersten stochastischen Taktgenerator (4), welcher dazu eingerichtet ist, ein erstes zufälliges, impulsförmiges Taktsignal (CLK1) zum Steuern der Geschwindigkeit des Schreibens eines ausgangsseitigen Wahrscheinlichkeitswerts, der durch ein mittels der Logikeinheit (2) erzeugtes Ausgangssignal (C) kodiert ist, in den Speicher (3) zu erzeugen,

- mindestens einen zweiten stochastischen Taktgenerator (5), welcher dazu eingerichtet ist, ein zweites zufälliges, impulsförmiges Taktsignal (CLK1) zum Steuern der Geschwindigkeit des Lesens aus dem Speicher (3) zu erzeugen, um, in einem gegebenen zeitlichen Fenster, die aktuelle Berechnung eines ausgangsseitigen Wahrscheinlichkeitswerts, welcher in dem Speicher (3) gespeichert ist, zu liefern.

2. Mikroprozessor gemäß dem Anspruch 1, wobei das Grundmodul (1) dazu eingerichtet ist, einerseits am Eingang binäre, zufällige und unabhängige Eingangssignale (A, B), welche jeweils eine impulsförmige, stochastische Binärcodierung oder eine zeitliche, telegraphische Binärcodierung jeweils von zwei gegebenen eingangsseitigen Wahrscheinlichkeitswerten darstellen, zu empfangen und andererseits am Ausgang ein binäres, zufälliges Ausgangssignal (C) vom telegraphischen Typ oder vom impulsförmigen Typ zu erzeugen, und wobei die Logikeinheit (2) dazu eingerichtet ist, die zwei Eingangssignale (A, B) zu kombinieren, um das Ausgangssignal (C) gemäß der bestimmten logischen Funktion zu erzeugen, so dass das Ausgangssignal (C) eine impulsförmige, stochastische Binärcodierung oder eine zeitliche, telegraphische Binärcodierung des ausgangsseitigen Wahrscheinlichkeitswerts abhängig von den gegebenen eingangsseitigen Wahrscheinlichkeitswerten darstellt.

3. Mikroprozessor gemäß irgendeinem der Ansprüche 1 und 2, wobei die Logikeinheit (2) dazu eingerichtet ist, die zwei Eingangssignale (A, B) zu kombinieren, um das Ausgangssignal gemäß einer oder mehrerer von Produkt-, Summen- oder Divisionsfunktionen zu erzeugen, so dass der durch das Ausgangssignal (C) kodierte ausgangsseitige Wahrscheinlichkeitswerts dem Produkt, der Summe bzw. der Division der eingangsseitigen Wahrscheinlichkeitswerte, welche jeweilig durch die zwei Eingangssignale (A, B) kodiert sind, entspricht.

4. Mikroprozessor gemäß irgendeinem der Ansprüche 1 bis 3, wobei der Mikroprozessor mehrere Grundmodule (1) gemäß irgendeinem der Ansprüche 1 bis 3 aufweist, wobei der Mikroprozessor dazu eingerichtet ist, parallel mindestens zwei Ausgangssignale (C) unter Verwendung von mindestens zwei bestimmten Grundmodulen (1) unter den Grundmodulen (1) zu erzeugen, so dass die Durchführung von mindestens zwei korrespondierenden stochastischen Berechnungen auf parallele Weise ermöglicht wird.

5. Mikroprozessor gemäß dem Anspruch 4, wobei die mindestens zwei bestimmten Grundmodule (1) miteinander vernetzt sind, so dass der Austausch von Signalen zwischen den zwei Grundmodulen (1) ermöglicht wird.

6. Mikroprozessor gemäß dem Anspruch 5, wobei der Speicher (3) von mindestens einem von den zwei Grundmodulen (1), welche miteinander vernetzt sind, dazu eingerichtet ist, Vernetzungsbefehle bezüglich der Vernetzung und des Austauschs von Eingangssignalen und Ausgangssignalen (A, B, C) zwischen den zwei Grundmodulen (1), welche miteinander vernetzt sind, zu speichern

7. Mikroprozessor gemäß irgendeinem der Ansprüche 4 bis 6, wobei der Mikroprozessor mindestens zwei distanzierte Grundmodule (1) aufweist, wobei der Mikroprozessor ferner eine oder mehrere adressierbare Schaltboxen dazu aufweist, den Austausch von Eingangssignalen und Ausgangssignalen (A, B, C) zwischen den zwei distanzierten Grundmodulen (1) zu ermöglichen.

8. Mikroprozessor gemäß irgendeinem der Ansprüche 1 bis 7, wobei der Mikroprozessor einen oder mehrere Zufallssignalgeneratoren aufweist, von welchen jeder dazu eingerichtet ist, ein binäres Zufallssignal, welches eine Binärcodierung von einem Wahrscheinlichkeitswert, welcher mit einer Binärzahl zusammenhängt, darstellt, zu erzeugen, und wobei der oder die Grundmodule (1) dazu eingerichtet sind, am Eingang zwei binäre, zufällige und unabhängige Eingangssignale (A, B), welche durch den oder die Zufallssignalgeneratoren erzeugt werden, zu empfangen.

9. Datenverarbeitungssystem, aufweisend mindestens einen Zentralspeicher, welcher dazu eingerichtet ist, Befehle zu speichern, und mindestens eine zentrale Recheneinheit, welche dazu eingerichtet ist, die in dem Zentralspeicher gespeicherten Befehle auszuführen, wobei die zentrale Recheneinheit mindestens einen Mikroprozessor gemäß irgendeinem der Ansprüche 1 bis 8 aufweist.

**Claims**

1. A microprocessor comprising at least one elementary stochastic computation module (1) able to receive, as input, two random and independent binary input signals (A, B) each representing a binary coding of two respective given input probability values, and able to generate, as output, at least one random binary output signal (C) from two input signals (A, B), said elementary module (1) comprising:

- at least one programmable logic unit (2), able to combine two input signals (A, B) to generate an output signal (C) according to at least one determined logic function, such that the output signal (C) represents a binary coding of an output probability value as a function of the given input probability values;
- at least one addressable memory (3), able to store an output probability value coded by an output signal (C) generated by the logic unit (2);
- at least one first stochastic clock (4), able to produce a first random impulse clock signal (CLK1) to control the writing speed, in the memory (3), of an output probability value coded by the output signal (C) generated by the logic unit (2);
- at least one second stochastic clock (5), able to produce a second random impulse clock signal (CLK2) to control the reading speed of the memory (3), so as to provide the current evaluation, over a given time window, of an output probability value stored in the memory (3).

2. The microprocessor according to claim 1, wherein the elementary module (1) is able on the one hand to receive, as input, random and independent binary input signals (A, B) each representing a stochastic impulse binary coding or a telegraphic temporal binary coding, respectively, of the two given input probability values, and on the other hand to generate, as output, a random binary output signal (C), of the telegraphic or impulse type, and wherein the logic unit (2) is able to combine the two input signals (A, B) to generate the output signal (C) according to the determined logic function, such that the output signal (C) represents a stochastic impulse binary coding or a telegraphic temporal binary coding of the output probability value as a function of the given input probability values.

3. The microprocessor according to any one of claims 1 and 2, wherein the logic unit (2) is able to combine the two input signals (A, B) to generate the output signal (C) according to one or several of the product, sum and division functions, such that the output probability value coded by the output signal (C) respectively corresponds to the product, the sum and the division, of the input probability values respectively coded by the two input signals (A, B).

4. The microprocessor according to any one of claims 1 to 3, the microprocessor comprising several elementary modules (1) according to any one of claims 1 to 3, the microprocessor being able to generate, in parallel, at least two output signals (C) via at least two elementary modules (1) determined from among said elementary modules (1), so as to allow the implementation, in parallel, of at least two corresponding stochastic computations.

5. The microprocessor according to claim 4, wherein the at least two determined elementary modules (1) are interconnected so as to allow signals to be exchanged between them (1).

6. The microprocessor according to claim 5, wherein the memory (3) of at least one of the two interconnected elementary modules (1) is able to store interconnection instructions relative to the interconnection and exchange of input and output signals (A, B, C) between the two interconnected elementary modules (1).

7. The microprocessor according to any one of claims 4 to 6, the microprocessor comprising at least two remote elementary modules (1), and one or several addressable switch boxes so as to allow input and output signals (A, B, C) to be exchanged between the two remote elementary modules (1).

8. The microprocessor according to any one of claims 1 to 7, the microprocessor comprising one or several random signal generators each able to generate a random binary signal generating a binary coding of a probability value associated with a binary number, and the elementary modules (1) are able to receive, as input, two random and independent binary input signals (A, B) generated by the random signal generators.

9. A computer system comprising at least one central memory able to store instructions and at least one central processing unit able to execute instructions stored in the central memory, the central processing unit comprising at least one microprocessor according to any one of claims 1 to 8.

FIG.1

FIG.2

FIG.3

FIG.4

FIG.5

FIG.6